(19) Europäisches Patentamt

European Patent Office

Office européen des brevets

(11) **EP 0 818 792 B1**

(12) **EUROPEAN PATENT SPECIFICATION**

(45) Date of publication and mention
of the grant of the patent:
**27.07.2005   Bulletin 2005/30**

(51) Int Cl.7: **H01G 4/30**

(21) Application number: **97401043.1**

(22) Date of filing: **09.05.1997**

(54) **Multilayer capacitor**

Vielschichtkondensator

Condensateur multicouche

(84) Designated Contracting States:
**CH DE GB LI SE**

(30) Priority:  **09.05.1996  JP 11483296**

(43) Date of publication of application:
**14.01.1998   Bulletin 1998/03**

(73) Proprietor: **MURATA MANUFACTURING CO., LTD.**
**Nagaokakyo-shi Kyoto-fu 226 (JP)**

(72) Inventors:
• **Kuroda, Yoichi**
**Nagaokakyo-shi, Kyoto-fu (JP)**
• **Honda, Yukio**
**Nagaokakyo-shi, Kyoto-fu (JP)**
• **Osuga, Kazumi**
**Nagaokakyo-shi, Kyoto-fu (JP)**

(74) Representative: **Joly, Jean-Jacques et al**
**Cabinet Beau de Loménie**
**158, rue de l'Université**
**75340 Paris Cédex 07 (FR)**

(56) References cited:
**FR-A- 2 555 355**

• **PATENT ABSTRACTS OF JAPAN vol. 014, no. 112 (E-0897), 28 February 1990 & JP 01 312815 A (MURATA MFG CO LTD), 18 December 1989,**
• **PATENT ABSTRACTS OF JAPAN vol. 095, no. 011, 26 December 1995 & JP 07 201633 A (MATSUSHITA ELECTRIC IND CO LTD), 4 August 1995,**

**Description**

**BACKGROUND OF THE INVENTION**

**1. Field of the Invention**

The present invention relates generally to electronic components, and more particularly to capacitive elements having multiple layer lamination structure. The invention also relates to improvements in such multilayer capacitors for preventing or at least greatly suppressing occurrence of surface dielectric breakdown therein.

**2. Description of the Prior Art**

Conventionally, multilayer capacitive elements include multilayer ceramic capacitors which may offer capabilities of providing an increased value of static capacitance whilst being of reduced or minimized size. This makes such capacitors well adaptable for use with electrical circuitry able to withstand relatively low voltages or having relatively low rated voltage characteristics. Unfortunately, the multilayer ceramic capacitors remain unsuitable for use as the so-called "middle- or high-voltage" capacitors with rated voltage of several hundreds volts or greater. When designing these middle- or high-voltage capacitors, increasing the level of rated withstand voltage of dielectric layers laid between internal capacitor electrodes might be attained by increasing the thickness of dielectric layers accordingly. However, such an increase does not come without an accompanying "trade-off" penalty, namely, as the dielectric layer thickness increases, resultant capacitance decreases. Even where such capacitance reduction might be compensated for by appropriate design of electronic circuitry, the known capacitors encounter a further, more serious problem; that is, it remains difficult to prevent aerial surface dielectric breakdown as can occur between an external electrode and one internal electrode, at the uppermost layer, which is to be applied with a voltage of the reverse polarity relative to that of the external electrode.

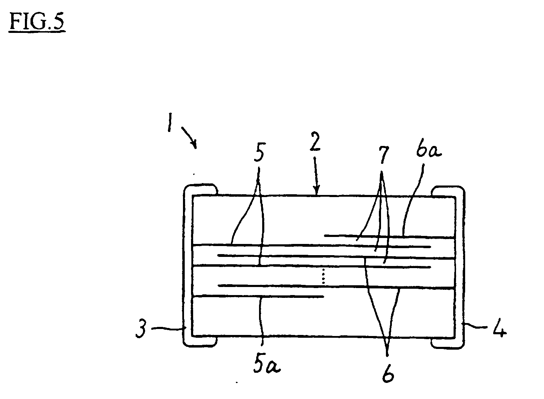

One prior approach for enabling inhibition of such aerial or "in-the-air" surface dielectric breakdown is disclosed, for example, in Published Unexamined Japanese Patent Application (PUJPA) No. 57-17615. This prior art will be described in connection with Fig. 5 hereafter. As shown in Fig. 5, a multilayer capacitor structure 1 has a capacitor main body 2 and a pair of first and second external electrodes 3 and 4 formed at certain opposite locations on the outer surfaces of the capacitor main body 2. The main body 2 consists of an alternate lamination of a plurality of internal electrodes 5, 6 and plural dielectric layers 7. These internal electrodes 5, 6 may be classified into two groups: one group consists of the first internal electrodes 5, and the other consists of the second internal electrodes 6. A respective one of the first internal electrodes 5 makes a pair with a corresponding, adjacent one of the second internal electrodes 6, with one dielectric layer 7 laid between them thus defining a particular static capacitance therebetween. The first internal electrodes 5 are electrically connected to a first external electrode 3 whereas the second internal electrodes 6 are electrically coupled to a second external electrode 4. The above multilayer capacitor structure per se has been widely employed in currently available standard capacitors.

In the multilayer capacitor 1, in order to prevent in-the-air surface dielectric breakdown, the internal electrodes 5, 6 are designed in such a manner that their outermost ones 5a, 6a placed at the uppermost and lowermost positions of the multilayer structure are shortened in length to ensure that these electrodes 5a, 6a are nearly half the length of the remaining ones of the internal electrodes 5, 6. This may serve to enable an increase in the net distance between one external electrode 3 and the opposing end of its associated uppermost internal electrode 6a which will be at a potential opposite in polarity to that of the external electrode 3. The same goes for the pair consisting of the other external electrode 4 and its associated lowermost internal electrode 5a. This in turn results in the electric field created therebetween being decreased in intensity to thereby eliminate occurrence of in-the-air surface dielectric breakdown.

Unfortunately, the prior art capacitor is still faced with several serious problems as will be set forth below.

One problem of the multilayer prior art capacitor 1 as taught by PUJPA No. 57-17615 is that the static capacitance thereof may be greatly decreased in value and may even be as low as half the static capacitance available from standard multilayer capacitors. This is because of the fact that the capacitor 1 comes with a decrease in area of the outermost internal electrodes 5a, 6a as compared with the remaining ones of the internal electrodes 5, 6, resulting from the use of shortened outermost electrodes 5a, 6a as stated supra.

Another problem of the prior art capacitor 1 is that the complexity in the manufacture thereof is increased. This is due to the fact that during lamination steps of ceramic sheets for the fabrication of the intended multilayer structure, it is necessary to prepare and treat an increased number of differently patterned sheets.

Still another problem is that the resulting surface dielectric breakdown characteristics can vary or deviate among the fabricated capacitors. This occurs due to the fact that, while the in-the-air surface dielectric breakdown characteristics remain inherently variable depending upon the actual distance between each outermost internal electrode 5a, 6a and its associated external electrode 4, 3, such distance tends to vary during the step of laminating multiple electrode sheets with an insulative film being sandwiched between adjacent ones thereof.

A further problem is that even with the outermost internal electrodes 5a, 6a shortened in length, the surface dielectric breakdown level can still decrease in some cases. More specifically, even where the outermost - say, "top" and "bottom" - internal electrodes 6a, 5a are shortened in length, increasing the net distance between each of them and the respective electrically coupled external electrode 3 or 4, when the multilayer capacitor 1 is mounted on a printed wiring board (PWB), it will possibly take place that one of such electrodes 5a, 6a accidentally comes closer to an associated conductive "land" pad on the PWB. This unwanted positional contiguity - or in the worst case, partial contact with each other - can adversely affect resultant surface dielectric breakdown characteristics, thus reducing the breakdown level.

FR-A-2,555,355 describes a multilayer capacitor structure having a capacitance formation section with an alternate lamination of a plurality of internal electrodes and a plurality of dielectric layers, and outer layer sections including dielectric materials stacked on upper and lower surfaces of the capacitance formation section. External electrodes are provided on the sides of the capacitor structure. On at least one of the outer surfaces of the outer layer sections there is a protection screen designed to protect the capacitor from harmful effects of radiation. This protective screen is formed of a second type of ceramics material having a lower relative dielectric constant than that of the main body of the capacitor. The protective screen is typically 100 to 300 μm thick and, in one example, has a relative dielectric constant of 25.

## SUMMARY OF THE INVENTION

It is therefore an object of the present invention to provide a multilayer capacitive device capable of avoiding the problems faced with the prior art.

It is another object of the invention to provide an improved multilayer capacitor capable of reducing electrical field intensity at external electrode edges while suppressing or eliminating occurrence of surface dielectric breakdown.

To attain the foregoing objects the present invention provides a multilayer capacitor structure having a capacitor main body including a capacitance formation section with an alternate lamination of a plurality of internal electrodes and a plurality of dielectric layers, and outer layer sections including dielectric materials as stacked on upper and lower surfaces of the capacitance formation section respectively. An internal electrode defines the outer surface of the capacitance formation section. The capacitor structure also includes first and second external electrodes as formed at mutually different positions on the external surface of the capacitor main body. The plurality of internal electrodes are classified into first internal electrodes and second internal electrodes being arranged to form a static capacitance between adjacent ones of each pair thereof. The first internal electrodes are electrically connected to the first external electrode whereas the second internal electrodes are electrically connected to the second external electrodes. The structure is characterised in that each of the outer layers comes with a dielectric breakdown prevention layer which either constitutes the entire outer layer or constitutes a part of the outer layer located at an inner surface thereof This layer has a specifically selected relative dielectric constant ε that is less in value than that of the dielectric layers of the capacitance formation section and also is not greater than 300. The dielectric breakdown prevention layer also has a thickness d [μm] which satisfies a specific relation as given by: d > (0.2 × ε) + 20, and is in contact with the outer surface of the capacitance formation section.

These and other objects, features and advantages of the invention will be apparent from the following more particular description of preferred embodiments of the invention, as illustrated in the accompanying drawings.

## BRIEF DESCRIPTION OF THE DRAWINGS

Fig.1 is a diagram showing a cross-sectional view of a multilayer capacitor in accordance with one preferred embodiment of the present invention.
Fig.2 is a diagrammatic representation of the multilayer capacitor of Fig. 1 as mounted on a PWB.
Figs. 3 and 4 illustrate, in cross-section, multilayer capacitors helpful for understanding further embodiments of the invention.
Fig. 5 depicts in cross-section one prior art multilayer capacitor.

## DETAILED DESCRIPTION OF THE INVENTION

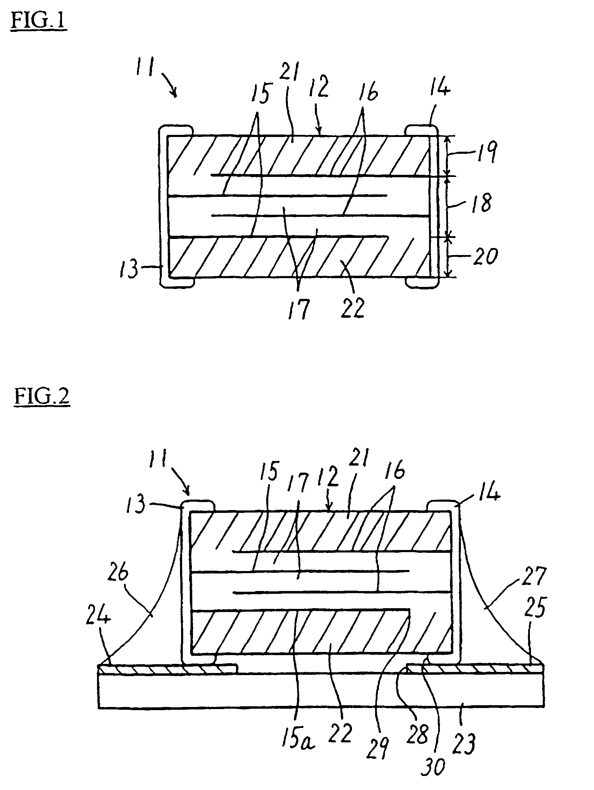

Referring to Fig. 1, a capacitor with multiple-layer lamination structure in accordance with one preferred embodiment of the invention is generally designated by numeral 11. This multilayer capacitor 11 is constituted from a capacitor main body 12 and a pair of first and second external electrodes 13, 14 which are formed at opposite positions on the outer wall surfaces of capacitor main body 12. Capacitor main body 12 includes a capacitance formation section 18 which is structured from an alternate lamination of a plurality of internal electrodes 15, 16 and multiple dielectric layers 17 in such a manner that one dielectric layer 17 is sandwiched between adjacent ones of the internal electrodes 15, 16. Capacitor main body 12 also includes an outermost insulative or dielectric layer section 19 on the top surface of capacitance formation section 18, and an outermost dielectric layer section 20 on the bottom surface thereof.

Each of the first internal electrodes 15 and an adjacent one of the second internal electrodes 16 makes a pair with one dielectric layer 17 being laid therebetween for formation of a static capacitance therein. First internal electrodes 15 are electrically connected to the first external electrode 13 whereas second internal electrodes 16 are electrically connected to the second external electrode 14.

The above-mentioned features of the structural arrangement per se might be well known among those skilled in the art to which the invention pertains. Some characterizing features of this embodiment will be set forth below.

As shown by use of hatching in Fig. 1, the "top" outer dielectric layer section 19 has a dielectric breakdown prevention layer 21 as formed on the top internal electrode; similarly, the "bottom" outer layer section 20 has a dielectric breakdown prevention layer 22 on the bottom internal electrode. These dielectric breakdown prevention layers 21, 22 are made of a chosen insulative or dielectric material which has specific relative dielectric constant E less than that of the dielectric layers 17 in the capacitance formation section 18 and simultaneously less than or equal to 300. The thickness d [$\mu$m] of a respective one of the dielectric breakdown prevention layers 21, 22 is carefully selected in value so as to satisfy a specific formula: $d > (0.2 \times \varepsilon) + 20$. The reason for applying these dielectric breakdown prevention criteria regarding the material and dimensions will become apparent from the discussion of further embodiments later in the description.

By providing in the opposite outer layer sections 19, 20 the dielectric breakdown prevention layers 21, 22 with specifically designed relative dielectric constant and thickness as stated supra, it becomes possible to force the intensity of electric field to remain lowered at the edge portions of external electrodes 13, 14. This in turn, enables successful prevention of occurrence of in-the-air surface dielectric breakdown therein.

This invention may be typically applied not only to ceramic capacitor devices but also to any other types of multilayer capacitors employing dielectric materials other than ceramics.

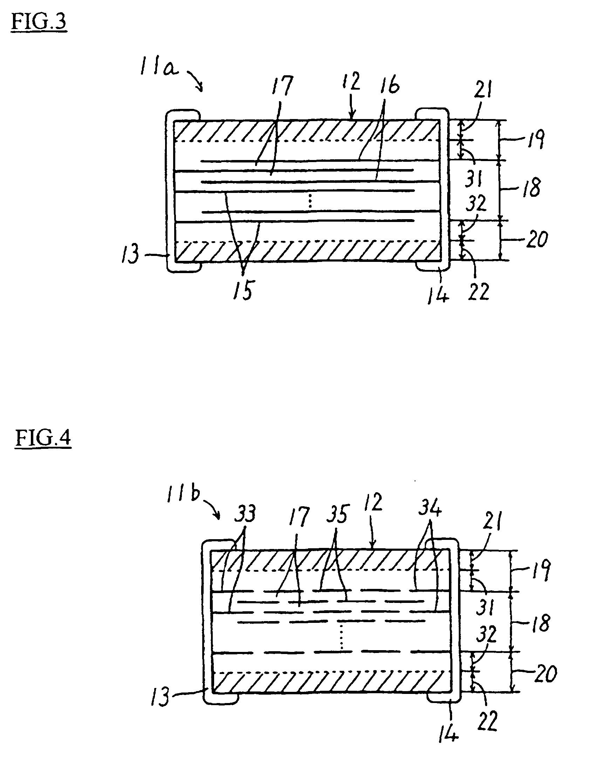

One exemplary assembly state of the multilayer capacitor 11 of Fig. 1 is shown in Fig. 2, wherein capacitor 11 is mounted on a printed circuit board (PCB) or printed wiring board (PWB) 23.

As shown in Fig.2, the multilayer capacitor 11 is rigidly placed on the PWB 23 and electrically coupled at external electrodes 13, 14 to associated conductive connection pads or "lands" 24, 25 on PWB 23 via solders 26, 27 applied thereonto.

Typically, after mounting on the PWB 23, the surface dielectric breakdown level of the multilayer capacitor 11 would have become lower than before. This can be said because in the mounted state, the distance, for example, between a terminating edge 28 of one conductive land 25 and a distal end 29 of the lowermost internal electrode 15a - this internal electrode 15a is potentially opposite in polarity to land 25 - is less than the distance between its corresponding terminating edge 30 of the external electrode 14 and the distal end 29 of such internal electrode 15a, causing the electric field to become stronger at terminating edge 28 of conductive land 25.

However, in this regard, with the multilayer capacitor 11 shown in Fig.1, the outer layer sections 19, 20 of capacitor main body 12 are specifically provided with the dielectric breakdown prevention layers 21, 22, respectively. With such an arrangement, when mounted on the PWB 23 as shown in Fig.2, since one dielectric breakdown prevention layer 22 placed on the side of PWB 23 has a reduced relative dielectric constant as mentioned previously, this acts to lower the intensity of an electric field as created between the terminating edge 28 of conductive land 25 and distal end 29 of lowermost internal electrode 15a, thus enabling suppression or elimination of occurrence of surface dielectric breakdown.

A multilayer capacitor 11a helpful for understanding another embodiment of the invention is shown in Fig.3, wherein like parts or components to those of Figs. 1 and 2 are designated by like reference numerals for purposes of convenience of explanation only.

This multilayer capacitor 11a of Fig. 3 is similar to that (11) shown in Fig. 1, with the dielectric breakdown prevention layers 21, 22 being modified to constitute part of respective outer layer sections 19, 20 of the capacitor main body 12 rather than the entire region thereof. More specifically, the top outer layer section 19 consists of two parts: an upper half section constituted from the dielectric breakdown prevention layer 21, and a lower half section comprised of an invalid or "null" layer 31. Likewise, the bottom outer layer section 20 consists of an upper half section formed of a null layer 32, and a lower half section of dielectric breakdown prevention layer 22 as shown. These null layers 31, 32 may be made of the same material as that of dielectric layers 17 in capacitance formation section 18.

With such a configuration employing the "partial use" of dielectric breakdown prevention layers 21, 22 in outer layer sections 19, 20 also, similar "surface dielectric breakdown prevention" advantages are attainable insofar as the thickness-setting criterion is met.

Note in Fig.3 that while the internal electrodes 15, 16 and their associated dielectric layers 17 in the capacitance formation section 18 are greater in number than those of the embodiment of Fig. 1, this does not constitute any substantive difference thereover.

Note also that in Fig.3, while the dielectric breakdown prevention layers 21,22 are arranged at the opposite peripheral surfaces of outer layer sections 19, 20, according to a further embodiment of the present invention these may alternatively be formed at inner peripheral surfaces thereof.

A multilayer capacitor 11b helpful for understanding a further embodiment of the invention is shown in Fig.4, wherein like numerals are used to identify like parts for clarity purposes.

The multilayer capacitor 11b of Fig.4 may be similar to that 11a shown in Fig.3 with the internal electrodes 15, 16 being replaced with an ensemble of first "lead" internal electrodes 33 electrically interconnected to the first external electrode 13, second lead internal electrodes 34 electrically connected to the second external electrode 14, and a plurality of insulated or "electrically floating" internal electrode segments 35, as shown in Fig.4. The term "lead" as used herein may refer to any conductor for use in electrically coupling the internal electrode segments to one of the first and second external electrodes 13, 14. The floating internal electrodes 35 are arranged between the first and second lead internal electrodes 33, 34 for creation of a series combination of multiple capacitances inside the capacitance formation section 18.

In general, this multi-layer capacitor comprises a lamination of a plurality of superposed layers some or all of which may include internal electrodes or internal electrode portions. Thus, for example, the lamination may consist of a number of layers each including an internal electrode, or a number of layers each including a plurality of internal electrodes, or of a number of layers some of which do not include any internal electrodes.

In the structure of Fig.4, an array of seven floating internal electrode segments 35 are disposed between one pair of opposing first and second internal lead electrodes 33, 34 thereby forming a train of eight series-coupled capacitance components associated therewith. However, as can be readily seen by those skilled in the art, the invention is not exclusively limited to this number per se. The internal series-coupled capacitance components may freely be modified in number as required, such as having two, three, four, five, six, and so forth.

One significant advantage of the multilayer capacitor structure 11a of Fig.4 is that it offers the "capacitance subdivision" effect which in turn serves to further enhance the level of high-voltage withstanding characteristics thereof

The rest of this description will be devoted to explanation of some practical examples employing the principles of the invention. First, consider an exemplary device having the structure of the Fig. 1 embodiment as manufactured in a way as will be set forth below.

A capacitance formation section 18 was prepared by sequentially laminating dielectric layers 17 which are 100-μm thick, with relative dielectric constant of 2500, along with two internal electrodes 15 and two electrodes 16 to provide the multilayer structure shown in Fig. 1. Then, there were manufactured a variety of samples in which the relative dielectric constant of dielectric breakdown prevention layers 21, 22 was varied between samples in such a manner as to exhibit values of 100, 200 and 300 while at the same time causing the thickness to change among values 20, 40, 60, 80, 100, 120 and 140 micrometers.

The resultant multilayer ceramic capacitor samples were subjected to the AC-BVD test for identification of presence or absence of aerial discharge in order to analyze and evaluate the resulting surface dielectric breakdown level with respect to each sample. During this test procedure, the surface dielectric breakdown was made certain by observing whether aerial discharge took place upon application between the external electrodes 13, 14 of an AC voltage whose potential rose at a rate of 200 volts per second while each sample was in the air.

Table 1 below well demonstrates the correlation of the relative dielectric constant and thickness of the dielectric breakdown prevention layers 21, 22 versus the rate of occurrence (occurrence number divided by total sample number) of surface dielectric breakdown.

Table 1

| Relative Dielectric Constant ε | Thickness d (μm) | | | | | | |
|---|---|---|---|---|---|---|---|
| | 20 | 40 | 60 | 80 | 100 | 120 | 140 |
| 100 | 8/10 | 5/10 | 0/10 | 1/10 | 0/10 | 0/10 | 0/10 |
| 200 | 9/10 | 7/10 | 4/10 | 0/10 | 0/10 | 0/10 | 0/10 |
| 300 | 10/10 | 8/10 | 9/10 | 5/10 | 1/10 | 0/10 | 0/10 |

As readily seen by those skilled in the art from the foregoing Table 1, the surface dielectric breakdown prevention may be successfully attained under specific conditions that the dielectric breakdown prevention layers 21, 22 are less than or equal to 300 in relative dielectric constant and simultaneously the thickness thereof satisfies:

$$d > (0.2 \times \varepsilon) + 20,$$

where d is the thickness of layers 21, 22 as measured in microns (μm).

Next, some actual working samples of the multilayer ceramic capacitor 11b shown in Fig. 4 were also prepared in a way as will be explained below.

A capacitance formation section 18 was prepared by sequentially laminating dielectric layers 17 which are 30-μm thick, with relative dielectric constant of 2500, along with internal lead electrodes 33, 34 and electrically floating internal electrode segments 35 such that these internal electrodes were forty (40) in lamination number. The same dielectric material was employed for dielectric layers 17 and null layers 31, 32, both of which measured 50 μm in thickness. Thus, several samples were manufactured including (1) a capacitor structure having dielectric breakdown prevention layers 21, 22 which are 300-μm thick with relative dielectric constant of 2500, (2) a capacitor having dielectric breakdown prevention layers 21, 22 which are 50-μm thick with relative dielectric constant of 300, and (3) a capacitor having dielectric breakdown prevention layers 21, 22 which are 100-μm thick with relative dielectric constant of 300. These three types of samples will be identified by labels "SPL1" to "SPL3" hereinafter for clarity purposes.

Like the previous case, resultant multilayer ceramic capacitor samples were subjected to the AC-BVD test for identification of presence or absence of aerial discharge, in order to evaluate resultant surface dielectric breakdown level with respect to each sample. Table 2, as will be presented below, well demonstrates the relation of an average value (X), maximum value (MAX), minimum value (MIN) and deviation (a) of the surface dielectric breakdown level (AC-BVD) with respect to twenty test samples prepared.

Table 2

| Sample No. | AC-BVD [KVrms] | | | |
|---|---|---|---|---|
| | X | MAX | MIN | σ |
| #1 | 8/10 | 5/10 | 0/10 | 1/10 |
| #2 | 9/10 | 7/10 | 4/10 | 0/10 |
| #3 | 10/10 | 8/10 | 9/10 | 5/10 |

It can be seen by experts in the art that in Table 2 above, the performance of the sample SPL1 may be equivalent to the prior art whereas SPL3, which meets the "relative dielectric constant/thickness" criteria as given by the formula presented supra, is more excellent than the former in overall dielectric breakdown characteristics. This demonstrates the effectiveness of the present invention even for use with multilayer capacitors of the type which have series-connected capacitance components formed therein.

It should be noted that as can be seen upon comparing the samples SPL1 and SPL2, when the relative dielectric constant of dielectric breakdown prevention layers 21, 22 is reduced in value from 2500 to 300, the resulting surface dielectric breakdown level remained substantially identical regardless of the fact that the thickness thereof was decreased from 300 to 50 μm. This may be considered to originate from the presence of a series combination of capacitance components in the capacitance formation section 18 of Fig. 4, which successfully functions to "compensate" for such possible decrease in surface dielectric breakdown level.

As has been described above, according to the present invention, the individual one of outer layer sections of the capacitor main body is specifically configured to come with its exclusive dielectric breakdown prevention layer. This dielectric breakdown prevention layer is such that its relative dielectric constant ε is less in value than that of any dielectric layers of the capacitance formation section and also not more than 300, while the thickness d [μm] thereof is specifically selected so as to satisfy the following formula: $d > (0.2 \times \varepsilon) + 20$. With such an arrangement, as appreciated by those skilled in the art in the light of the foregoing description in conjunction with some embodiments, the external electrodes may remain lowered in electric field intensity at edge portions thereof, which in turn advantageously serves to eliminate or at least greatly suppress in-the-air surface dielectric breakdown otherwise occurring due to voltage application thereto, while simultaneously preventing such surface dielectric breakdown from attempting to arise during assembly onto PWBs. Consequently, employing the principles of the invention can permit achievement of improved multilayer capacitors adaptable for use with middle- or high-voltage withstanding circuitry. It should be noted that in this invention, setting the value of relative dielectric constant of the dielectric breakdown prevention layers at 300 or less is based on the fact that if it otherwise increases beyond such value then resultant thickness required for the dielectric breakdown prevention layers increases causing the total thickness of multilayer capacitors to undesirably increase accordingly when the present invention is applied in practice.

While the invention has been particularly shown and described with reference to preferred embodiments thereof, it will be understood by those skilled in the art that the foregoing and other changes in form and details may be made therein without departing from the scope of the invention as defined in the appended claims.

**Claims**

1.  A multilayer capacitive device (11) having a capacitor main body (12) including a capacitance formation section (18) with an alternate lamination of plural internal electrodes (15, 16) and plural dielectric layers (17), and outer layer sections (19, 20) including dielectric materials stacked on respective upper and lower surfaces of said capacitance formation section (18); and

    first and second external electrodes (13, 14) formed at mutually different positions on the external surface of said main capacitor body (12),

    wherein an internal electrode defines the outer surface of the capacitance formation section (18), wherein said internal electrodes are classified into first internal electrodes (15) and second internal electrodes (16) arranged to form a static capacitance between adjacent ones of each pair thereof, and wherein said first internal electrodes (15) are electrically connected to the first external electrode (13) whereas said second internal electrodes (16) are electrically coupled to the second external electrode (14),

    **characterized in that** each said outer layer (19, 20) comprises a dielectric breakdown prevention layer (21/22) having a relative dielectric constant $\varepsilon$ being less than that of the dielectric layers (17) of said capacitance formation section (18) and also less than or equal to 300, as well as having a thickness d [$\mu$m] satisfying d > (0.2 $\times \varepsilon$) + 20, said dielectric breakdown prevention layer forming the whole of the respective outer layer (19/20) so as to be in contact with the outer surface of the capacitance formation section (18).

2.  A multilayer capacitive device (11) having a capacitor main body (12) including a capacitance formation section (18) with an alternate lamination of plural internal electrodes (15,16) and plural dielectric layers (17), and outer layer sections (19, 20) including dielectric materials stacked on respective upper and lower surfaces of said capacitance formation section (18); and

    first and second external electrodes (13,14) formed at mutually different positions on the external surface of said main capacitor body (12),

    wherein an internal electrode defines the outer surface of the capacitance formation section (18), wherein said internal electrodes are classified into first internal electrodes (15) and second internal electrodes (16) arranged to form a static capacitance between adjacent ones of each pair thereof, and wherein said first internal electrodes (15) are electrically connected to the first external electrode (13) whereas said second internal electrodes (16) are electrically coupled to the second external electrode (14),

    **characterized in that** each said outer layer (19, 20) comprises a dielectric breakdown prevention layer (21/22)having a relative dielectric constant $\varepsilon$ being less than that of the dielectric layers (17) of said capacitance fonnation section (18) and also less than or equal to 300, as well as having a thickness d [$\mu$m] satisfying d > (0.2 $\times \varepsilon$) + 20, said dielectric breakdown prevention layer (21/22) forming part of the respective outer layer (19/20) and being located at an inner surface thereof so as to be in contact with the outer surface of the capacitance formation section (18).

**Patentansprüche**

1.  Eine kapazitive Mehrschichtvorrichtung (11), die einen Kondensatorhauptkörper (12) aufweist, der einen Kapazitätsbildungsabschnitt (18) mit einer abwechselnden Laminierung mehrerer innerer Elektroden (15, 16) und mehrerer dielektrischer Schichten (17) und äußere Schichtabschnitte (19, 20) umfasst, die dielektrische Materialien umfassen, die auf der oberen bzw. unteren Oberfläche des Kapazitätsbildungsabschnitts (18) gestapelt sind; und wobei eine erste und eine zweite äußere Elektrode (13, 14) an voneinander unterschiedlichen Positionen auf der Außenoberfläche des Hauptkondensatorkörpers (12) gebildet sind,

    wobei eine innere Elektrode die äußere Oberfläche des Kapazitätsbildungsabschnitts (18) definiert, wobei die inneren Elektroden in erste innere Elektroden (15) und zweite innere Elektroden (16) klassifiziert sind, die angeordnet sind, um eine statische Kapazität zwischen benachbarten jedes Paars derselben zu bilden, und wobei die ersten inneren Elektroden (15) elektrisch mit der ersten äußeren Elektrode (13) verbunden sind, wohingegen die zweiten inneren Elektroden (16) elektrisch mit der zweiten äußeren Elektrode (14) gekoppelt sind,

    **dadurch gekennzeichnet, dass** jede äußere Schicht (19, 20) eine dielektrische Durchbruchverhinderungsschicht (21/22) aufweist, die eine relative Dielektrizitätskonstante $\varepsilon$ aufweist, die kleiner ist als diejenige der dielektrischen Schichten (17) des Kapazitätsbildungsabschnitts (18) und ebenso kleiner oder gleich 300 ist, sowie eine Dicke d

[μm] aufweist, die d > (0,2 x ε) + 20 erfüllt, wobei die dielektrische Durchbruchverhinderungsschicht die gesamte jeweilige äußere Schicht (19/20) bildet, um in Kontakt mit der äußeren Oberfläche des Kapazitätsbildungsabschnitts (18) zu stehen.

**2.** Eine kapazitive Mehrschichtvorrichtung (11), die einen Kondensatorhauptkörper (12) aufweist, der einen Kapazitätsbildungsabschnitt (18) mit einer abwechselnden Laminierung mehrerer innerer Elektroden (15, 16) und mehrerer dielektrischer Schichten (17) und äußere Schichtabschnitte (19, 20) umfasst, die dielektrische Materialien umfassen, die auf der oberen bzw. unteren Oberfläche des Kapazitätsbildungsabschnitts (18) gestapelt sind; und wobei eine erste und eine zweite äußere Elektrode (13, 14) an voneinander unterschiedlichen Positionen auf der Außenoberfläche des Hauptkondensatorkörpers (12) gebildet sind,
wobei eine innere Elektrode die Außenoberfläche des Kapazitätsbildungsabschnitts (18) definiert, wobei die inneren Elektroden in erste innere Elektroden (15) und zweite innere Elektroden (16) klassifiziert sind, die angeordnet sind, um eine statische Kapazität zwischen benachbarten jedes Paars derselben zu bilden, und wobei die ersten inneren Elektroden (15) elektrisch mit der ersten äußeren Elektrode (13) verbunden sind, wohingegen die zweiten inneren Elektroden (16) elektrisch mit der zweiten äußeren Elektrode (14) gekoppelt sind,
**dadurch gekennzeichnet, dass** jede äußere Schicht (19, 20) eine dielektrische Durchbruchverhinderungsschicht (21/22) aufweist, die eine relative Dielektrizitätskonstante ε aufweist, die kleiner ist als diejenige der dielektrischen Schichten (17) des Kapazitätsbildungsabschnitts (18) und ebenso kleiner oder gleich 300 ist, sowie eine Dicke d [μm] aufweist, die d > (0,2 x ε) + 20 erfüllt, wobei die dielektrische Durchbruchverhinderungsschicht (21/22) einen Teil der jeweiligen äußeren Schicht (19/20) bildet und an einer inneren Oberfläche derselben angeordnet ist, um in Kontakt mit der äußeren Oberfläche des Kapazitätsbildungsabschnitts (18) zu stehen.

**Revendications**

**1.** Dispositif capacitif multicouche (11) possédant un corps principal de condensateur (12) qui comporte une section de formation de capacité (18) qui présente une stratification alternée de plusieurs électrodes internes (15, 16) et de plusieurs couches diélectriques (17), et des sections formant des couches externes (19, 20) qui comportent des matériaux diélectriques empilés sur les surfaces supérieure et inférieure respectives de ladite section de formation de capacité (18) ; et
des première et deuxième électrodes externes (13, 14) formées en des positions mutuellement différentes sur la surface externe dudit corps de condensateur principal (12),
où une électrode interne définit la surface externe de la section de formation de capacité (18), où lesdites électrodes internes sont dassées en premières électrodes internes (15) et deuxièmes électrodes internes (16) disposées de manière à former une capacité statique entre électrodes adjacentes de chaque paire d'électrodes, et où lesdites premières électrodes internes (15) sont électriquement connectées à la première électrode externe (13) tandis que lesdites deuxièmes électrodes internes (16) sont électriquement couplées à ladite deuxième électrode externe (14),
**caractérisé en ce que** chaque dite couche externe (19, 20) comprend une couche (21/22) d'empêchement de daquage diélectrique qui possède une constante diélectrique relative ε qui est inférieure à celle des couches diélectriques (17) de ladite section de formation de capacité (18) et est également inférieure ou égale à 300, tandis qu'elle possède une épaisseur d (exprimé en microns) qui satisfait la relation d > (0,2 x ε) + 20, ladite couche d'empêchement de daquage diélectrique formant l'ensemble de la couche externe respective (19/20) de façon à être en contact avec la surface externe de la section de formation de capacité (18).

**2.** Dispositif capacitif mutticouche (11) possédant un corps principal de condensateur (12) qui comporte une section de formation de capacité (18) qui présente une stratification alternée de plusieurs électrodes internes (15, 16) et de plusieurs couches diélectriques (17), et des sections formant des couches externes (19, 20) qui comportent des matériaux diélectriques empilés sur les surfaces supérieure et inférieure respectives de ladite section de formation de capacité (18) ; et
des première et deuxième électrodes externes (13, 14) formées en des positions mutuellement différentes sur la surface externe dudit corps de condensateur principal (12),
où une électrode interne définit la surface externe de la section de formation de capacité (18), où lesdites électrodes internes sont dassées en premières électrodes internes (15) et deuxièmes électrodes internes (16) disposées de manière à former une capacité statique entre électrodes adjacentes de chaque paire d'électrodes, et où lesdites premières électrodes internes (15) sont électriquement connectées à la première électrode externe (13) tandis que lesdites deuxièmes électrodes internes (16) sont électriquement couplées à ladite deuxième électrode externe (14),

**caractérisé en ce que** chaque dite couche externe (19, 20) comprend une couche (21/22) d'empêchement de daquage diélectrique qui possède une constante diélectrique relative ε qui est inférieure à celle des couches diélectriques (17) de ladite section de formation de capacité (18) et est également inférieure ou égale à 300, tandis qu'elle possède une épaisseur d (exprimé en microns) qui satisfait la relation d > (0,2 x ε) + 20, ladite couche d'empêchement de claquage diélectrique (21/22) formant une partie de la couche externe respective (19/20) et étant placée au niveau d'une surface interne de celle-ci de façon à être en contact avec la surface externe de la section de formation de capacité (18).

FIG.1

FIG.2

FIG.3

FIG.4

FIG.5